# EUROPEAN PATENT APPLICATION

(11) **EP 4 289 238 A1**
(43) Date of publication of application: **13.12.2023**
(21) Application number: 23178178.2
(22) Date of filing: 08.06.2023
(51) Int. Cl.: A01B 45/02

(54) **A GROUND AERATION DEVICE**

(30) Priority: 08.06.2022 GB 202208408
(71) Applicant: Knight, Peter, Bury St Edmunds, Suffolk IP29 5PW (GB)
(72) Inventor: Knight, Peter, Bury St Edmunds, Suffolk IP29 5PW (GB)
(74) Representative: ip21 Ltd

(57) **Abstract**

A ground aeration device comprise an air supply connector for receiving pressurised air from a source. A first supporting element for supporting a drill element for insertion into the ground and a Hydraulic hammer means. Said drill element further comprising a cavity operably connected to an aperture a pneumatic means operably connected to said air supply comprising a actuating means for controlling supply of pressurised air through the drill element. Said pneumatic means is arranged on said first supporting element. Characterised in that the aeration device further comprises a second supporting element, slidably attached to said first supporting element. A hydraulic means attached to said first and second supporting elements. Said first supporting element being movable via said hydraulic means from an initial parked position to a first position relative to said second supporting element, where said actuating means cooperates with a first actuating element of said second supporting element to enable a first flow of pressurised air through said drill element and said aperture.

## Description

### Technical Field

The invention relates generally to ground aeration devices.

### Background to the Invention

Ground aeration is the process of improving the circulation of air into the soil. Ground aeration devices are known and can provide bursts of air at a subterranean level, resulting in air pockets. The ground aeration process is desired for a number of uses, including invigorating roots, planting in wet conditions, and reducing the effects of compacted soil. It is known that water can remain for a long period on a subsurface, compacted layer forming what is often referred to as a 'black layer' of decomposed organic material under anaerobic conditions. Blowing air through this layer assists in drainage and can improve aeration in the layer. Agronomists, viticulturists, and horticulturists emphasise the role oxygen plays in the development of plant life. Ground aeration may also be used for soil drainage, for example, for sport pitches, or other outdoor events.

Known ground aeration devices are pneumatic, including a spike array which is driven into the ground and fed from an external pressurised air source. Such air sources are diesel/petrol powered air compressor units, which are typically towable or static units that provide large volumes of air due to potential power outputs the potential power output from these units.

A known problem of these devices is that aeration of the ground is only possible at one depth per aeration cycle. Thus, these devices are not capable of aerating multiple layers of compacted ground, which span over multiple subterranean depths. Moreover, the devices do not aerate at levels intermediate the one depth to which they are set.

Furthermore, these known devices cannot be operably mounted and operated by the driver of a low-speed traction vehicle, such as a tractor. WO2018/167452A1, EP3595426, US2020137941, GB20170004047, GB20170022185 US6939085B1, EP0430589A1, GB2144961A, US6598683B1, EP0190933A2, US2072331A each disclose known devices of this type.

### Summary of the Invention

In a first broad independent aspect the invention provides:
a ground aeration device comprising
an air supply connector for receiving pressurised air from a source;
a first supporting element supporting both a drill element for insertion into the ground and a hydraulic hammer means;
said drill element further comprising a cavity operably connected to an aperture;

A pneumatic means operably connected to said air supply comprising a actuating means for controlling supply of pressurised air through said drill element;
said pneumatic means is arranged on said first supporting element;
characterised in that
the aeration device further comprising a second supporting element slidably attached to said first supporting element;
a hydraulic means attached to said first and second supporting means
said first supporting element being movable by said hydraulic means from an initial parked position to a first position relative to said second supporting element; at said first position said actuating means cooperates with a first actuating element of said second supporting member to enable a first flow of pressurised air to through said drill element and said aperture.

This configuration is advantageous because it enables an operator to automatically aerate compacted soil at a predetermined depth.

This, provides a simplified operation in which the first supporting member, referred to as a 'carriage', for supporting the hydraulic hammer and drill element ((i.e. drill bit)) during an up and down movement relative to the second supporting element, which is referred to as a 'frame'.

The movement of the supporting carriage, relative to the supporting frame, will automatically actuate circuit 2, thereby allowing air to flow through the drill bit.

The device also has a hydraulic circuit which is fed from an external hydraulic source which drives the drill bit into the ground via the lowering and lifting movements of the supporting carriage relative to the supporting frame.

Thus, the device is suitable for sequentially for automatically driving at least one drill bit into the soil, automatically injecting air into the soil through the drill element, and then automatically removing the drill bit from the soil.

In an alternative configuration, the hammer means may be a of a pneumatic hammer means which is driven from an external air supply.

Preferably, said first supporting element being movable via said hydraulic means to a second position relative to said second supporting element, where said actuating means cooperates with a second actuating element of said second supporting element to enable a second flow of pressurised air through said drill element.

This configuration is advantageous because it provides a device which precisely aerates multiple layers of compacted ground at multiple subterranean depths. When diagnosing a compacted ground problem, the user of the device will assess an area of ground soil by penetrating the ground with a penetrometer. This senses the ground to locate multiple layers of compacted soil and at what depth they reside within the ground. This enables device user to move the first supporting member (carriage) and supporting drill bit to multiple depths and blow air into each identified layer of compacted soil and thereby aerating each compacted layer of compacted ground.

Preferably said movement of the first supporting element relative to the second supporting is along a vertical axis.

This configuration is advantageous because it enables the activation of the multiple airflows through the drill element, when the first supporting element (carriage and supported drill bit) are both raised or lowered relative to the second supporting element (supporting frame) along a vertical axis.

Preferably said first and second actuating elements are arranged in a linear array on said second supporting element.

This configuration enables the device to activate the multiple airflows through the drill element when the first supporting element (carriage) at predetermined locations, when the first supporting element (carriage) is moved relative to the second supporting element (supporting frame) along a vertical axis.

Preferably said actuating means further comprising an arm pivotally attached at one end thereto; the opposite end of said arm which cooperates with said first and second actuating elements of said second support element.

This configuration enables the actuator to initiate an air blast of compressed air which will to be dispensed by the drill bit, at a depth which is determined by the location of the actuating element on the supporting frame.

Preferably, said second supporting element further comprises an aperture for attachment of said actuating element.

Said configuration is advantageous because it attaches an actuating element at a location on the second supporting member (supporting frame), which in use, activates the second actuation element (pneumatic circuit 2 to drill element) when the first supporting element (Carriage) is raised or lowered to a predetermined position, relative the second supporting element (supporting frame). Thus, the location of the attached actuating member will determine the depth at which the compressed air will flowing through the drill element and subsequently aerate a compacted soil layer.

Preferably, second supporting element further comprises and linear array of said apertures, arranged along a vertical axis.

This configuration enables the actuating element to be attached multiple locations wherein each location determines an independent depth at which the compressed air will flow through the drill element and subsequently aerate a compacted soil layer.

In an alternative embodiment, said aperture is an elongate slot extending along a vertical axis.

This configuration allows the position of the actuating element to be continuously adjusted to a required location on the second supporting element (supporting frame), wherein the location determines a depth at which the compressed air will flow through the drill element and subsequently aerate the compacted ground.

Preferably, said actuating element further comprises a threaded element which cooperates with a threaded element of said aperture.

This configuration enables the releasable attachment of the actuating element to the cooperating aperture arranged within the second supporting means (supporting frame).

Preferable said apertures further comprises an indicator means which is indicative of the depth at which the compressed air will flowing through the drill element and subsequently aerate the compacted layer of soil.

Preferably, said air coupling is attached to the second supporting element.

This configuration enables the attachment of the external compressed air supply to the second supporting element (supporting frame) of the device. Thus, the pneumatic movement and use of the first supporting element (carriage) and supported drill element will not induce mechanical stress into the air coupling.

Preferably, said second supporting member an element of a supporting frame which is operably attachable to a vehicle.

This configuration enables the aeration device is to be installed on a high traction vehicle, which enables a user to mechanically aerate a large area of compacted ground, such as a sports field, vineyard or agriculture ground.

Preferably, said second supporting element is an element of a supporting frame which is operably attachable to a handcart device.

This configuration enables the aeration device to be installed on a manually moveable barrow device, which enables a user to manually maneuver the device in small areas of compact ground such as orchards and small gardens, where a larger mechanized vehicle cannot physically gain access. Thus, the user can walk behind the device to position and manually operate the aerating device in such small areas.

In a third broad independent aspect the invention provides a method of aerating compacted subterranean layers soil comprising the aerating device according to any of the previous claims.

This method allows the user to automatically operate the aerating device over multiple aerating cycles over a large area, without the having to manually select the depth at which the drill element will aerate each compacted soil layer.

### Brief Description of the Figures

Figure 1 shows a side view of the aerating device attached to a high traction vehicle, in which the aeration device is parked in its not in use position.
Figure 2a shows a side view of a compressed air actuation device which controls the flow of air through a drill element during a downward movement.
Figure 2b shows a side view of a compressed air actuation device which controls the flow of air through a drill element during an upward movement.
Figure 3 shows a side view of the aerating device attached to a high traction vehicle, in which the aeration device is positioned in a ground penetrating position.
Figure 4 shows a front view of the aeration device in which the aeration device is parked in its not in use position.

### A Detailed Description of the Invention

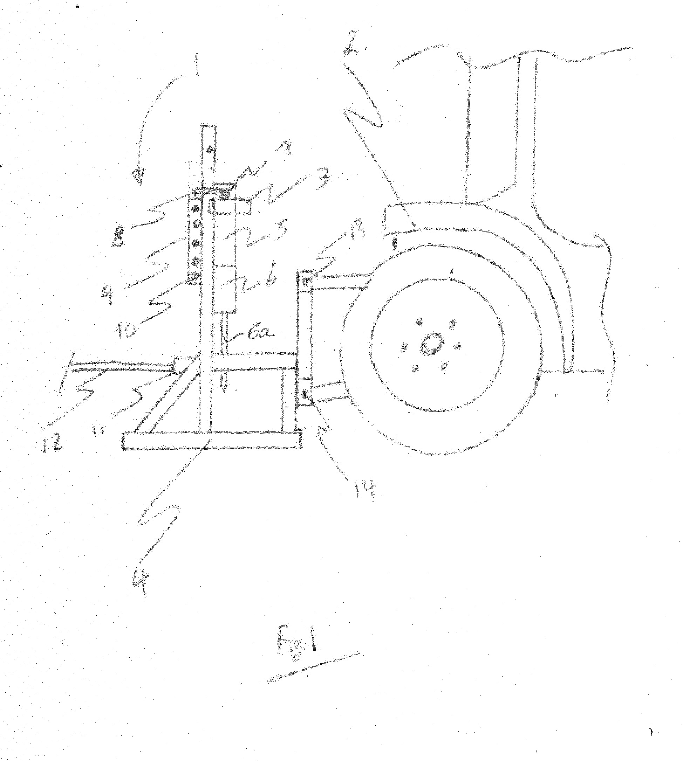

Figure 1 shows a ground aerating device, generally indicated by arrow 1, attached to a high traction vehicle 2. The aerating device 1 has at least two supports 3 and 4 which supports a hydraulic hammer means 5 with an attached drill element 6. For some applications, such as for example in viticulture, 2 devices can be coupled together which lessens compaction caused by the mass of the device itself.

The first support 3 houses both the hammer means 5 and the drill element 6 and is slidably attached to the second support 4 which is a supporting frame, comprising a base and vertically deployed post. The frame has a with a base element that is mountable on the ground and a vertical element on which first support 3 is slidably attached. The slidable attachment allows the first support (carriage) 3 to move along a vertical axis in relation to the second support (frame) 4.

An actuator 7 is located upon the first support 3. The actuator 7 comprises an arm 8 which extends along a horizontal axis and is pivotally attached at one end to the actuator 7. The opposite end of the arm 8 is free to engage an actuating element 10.

An array of actuating elements 10 is arranged on a bracket 9 and is located on the second support 4. The actuating elements 10 are evenly spaced along a vertical axis on a bracket 9. The bracket 9 is located on the rear facing surface of the second support 4 relative to the vehicle coupling.

An air hose coupling 11 for connecting an external air supply 12 to the second support 4. The external air supply 12 is connected to an actuator 7 which in use enables pressurised air to flow through the drill element 6, including a drill member 6a with which it is fluidly connected.

The external air supply initially communicates air to an air reservoir device (not shown) arranged on the second support(). The stored compressed air is then subsequently communicated through the drill element 6 and the drill member 6a.

An external hydraulic source (not shown) is operably connected to the hydraulic hammer 5.

The external hydraulic source is also connected to one or more hydraulic rams (not shown) which are operably attached to both first support 3 of the aerating device 1 and second support 4 of the aerating device. In use, the hydraulic rams drive the first support 3 in either an upwards or downwards movement relative to the second support 4, whilst being slidably attached to the second support 4. The aerating device 1 is attached to a high traction vehicle 2, typically a high traction agricultural type, such as a tractor. The attachment points 13 and 14 are typically of the 3 point hitch type.

In use, the following method is employed to aerate layers of compacted soil within the ground. The driver of the vehicle can operate the device from a suitable driving position within or outside a driver's cabin. Upon activation, both the hydraulic ram and hydraulic hammer are powered via a hydraulic coupling which is sourced by a hydraulic drive located on the vehicle. The hydraulic rams move the first support, relative to the second support in a downwards vertical movement. This downward movement drives the drill element 6 into the ground below.

During this downward movement, the hydraulic hammer 5 is activated. Thus, the hammer drives the drill element into the ground during the lowering movement.

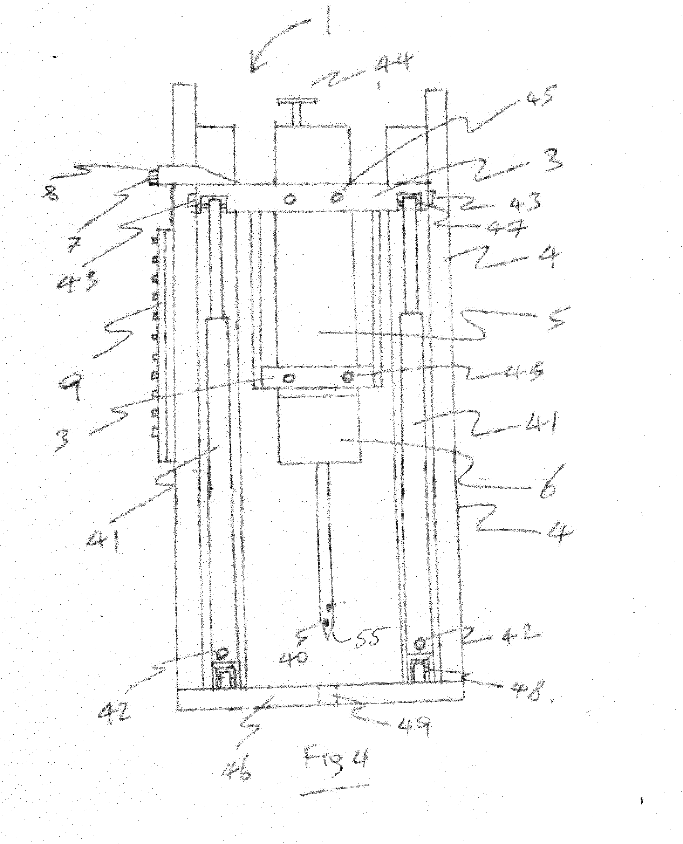

During the lowering movement, the arm 8 which is pivotally attached to the actuator 7 is activated during its contact with each actuating element 10 located on the bracket 9 attached to the second support 4. This activation of the actuator 7 allows the flow of compressed air from a coupled compressed air source to the drill element 6. Flow of compressed air can be controlled by means of a plunger within the actuator 7. During this activation, the compressed air will flow through air apertures 40 (see Figure 4) within the drill member 6a, whilst the actuator 7 is activated. The pressure of the compressed air applied, can be varied to suit the soil conditions.

By arranging multiple actuating elements 10 in a vertical linear array, the actuator 7 can then be activated multiple times during the lowering movement of the first support, which supports the drill element. In a further embodiment, not illustrated, the position of an actuating element 10 can be adjusted in height above the ground, allowing aeration to be delivered to different regions of the soil.

Each actuating element is located at predetermined positions within the linear array, which determines the depth location of the drill member 6a during the downward movement of the drill element 6. At each predetermined depth location, compressed air is driven into the compacted ground to aerate the compacted layer of soil at that depth. Therefore, as the drill element 6 is lowered, pushing the drill member 6a into the ground, an aerating air blast is driven into a layer of compacted soil through the apertures 40 of the drill member 6a, at a depth indicated by each actuating element 10. Thus, in one automated lowering and raising cycle, the device 1 provides multiple air blasts at each predetermined depth, to aerate multiple layers of compacted soil in the ground below the device 1. This automated process is more efficient than aerating each layer of compressed soil independently.

Each depth location of the drill member 6a is adjustable via amending the position of the associated actuation member 10 within the linear array.

Once the downward movement cycle has been completed, the hydraulic rams of the device are then automatically driven in the opposite direction so that they lift the first support 3, along with the supported hydraulic hammer 5 and drill element and member 6, 6a. During this upward movement, the arm 8 pivotally attached to the actuator 7 actuates the actuation means and thereby enables the compressed to flow to the drill element 6. Thereby allowing compressed air to be repeatedly driven into the compacted ground to aerate the compacted each layer of soil during the upward movement of the supported drill member 6a.

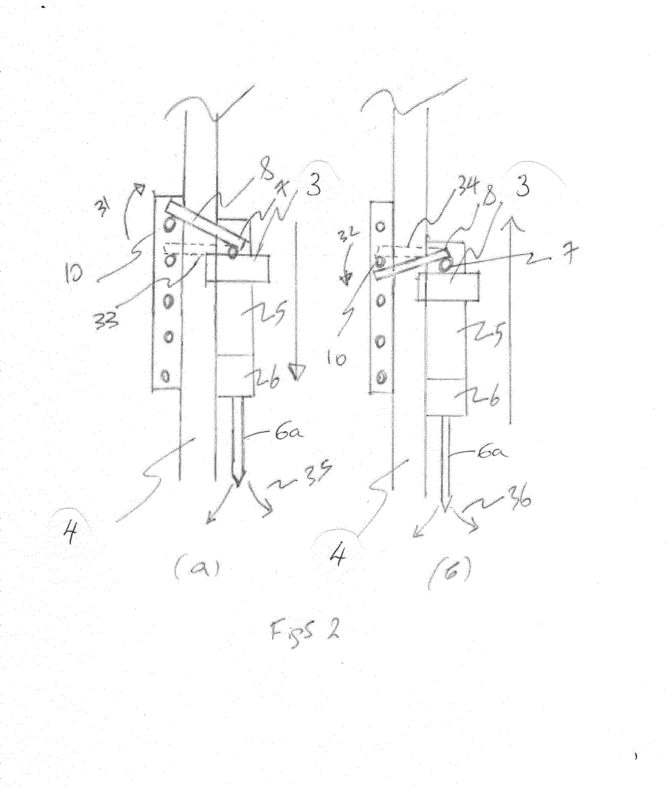

Figure 2a shows the downward movement cycle of the supported drill element 26, during which the arm 8 of the actuator 7 is engaged with the outer cylindrical surface of a cooperating actuation member 10.

In use, the arm 8 is pivoted in an upwards direction, indicated by arrow 31, which actuates the valve within the actuator 7 allowing compressed air to flow through from the external air supply, through the actuator 7 and out of the apertures 40 located at, or in close proximity to the tip 55 of the drill element 26. The compressed air flow is indicated by the arrows 35.

When the actuator 7 is in the unactuated position, the arm 8 is not engaged with the outer cylindrical surface of a cooperating actuation member 10. This unactuated position of the arm 8 is indicated by the arm's unpivoted position 33.

Figure 2b shows the upward movement cycle of the supported drill element 6, during which the arm 8 of the actuator 7 is engaged with the outer cylindrical surface of a cooperating actuation member 10.

In use, the arm 8 is pivoted in a downwards direction, indicated by arrow 32, which actuates the valve within the actuator 7 allowing compressed air to flow through from the external air supply, through the actuator 7 and out of the apertures 40 located at, or in close proximity to the tip 55 of the drill element 26. The compressed air flow is indicated by the arrows 36.

When the actuator 7 is in the unactuated position, the arm 8 is not engaged with the outer cylindrical surface of a cooperating actuation member 10. This unactuated position of the arm is indicated by the arm's unpivoted position 34.

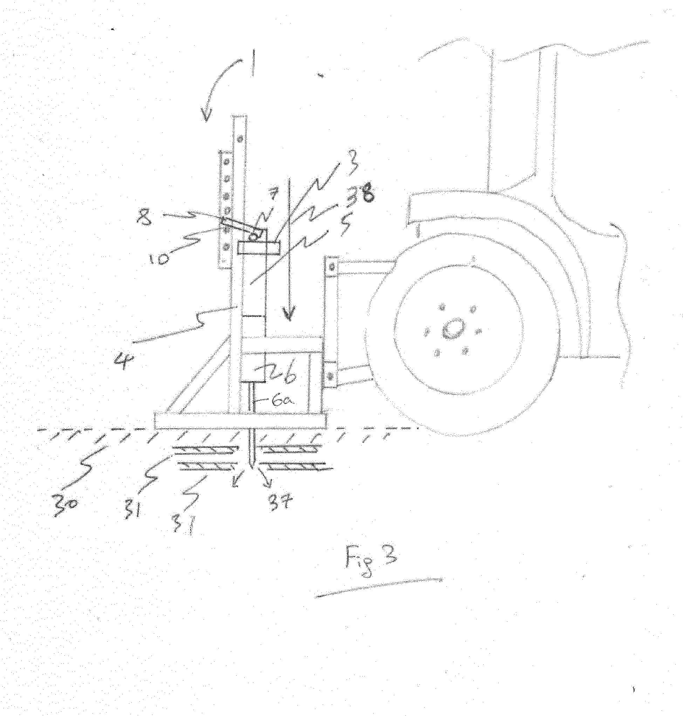

Figure 3 shows the device 1 in the configuration in which the drill element 6 is lowered such that the drill member 6a penetrates the ground surface 30, thereby gaining access to the multiple layers of subterranean compressed soil 31. The downward movement of the drill element is indicated by the arrow 38.

In use, the arm 8 of the actuator unit cooperates and engages with the surface of an actuation member 10. The actuation of the actuator 7 enables compressed air to flow through the drill element 26 and exit via apertures 40 located at the elements tip 55 into the compacted soil layer. This airflow is indicated by arrows 37

Figure 4 shows the aeration device 1 in a parked position when not in use. The device 1 is the same as the device shown in Figures 1 to 3, along with its attachment to a hydraulic ram 41. The hydraulic rams 41 are attached to the bottom plate element 46 of second supporting element 4.

Each ram is attached at a top end to the first support 3 via a pivoting attachment means. The pivoting means is a holding pin/bar 47 which extends through the top end into the body of the first hydraulic support means 3, about which the attached hydraulic ram pivots.

Each ram is attached at a bottom end to a solid foot plate element 46 via a pivoting attachment means. The pivoting attachment means is a holding pin/bar 48 which extends through the bottom end into the body of the first attachment means 4, about which the attached hydraulic ram pivots.

The foot plate element 46 comprises an aperture, through which the drill element 26 can be lowered when penetrating the ground beneath the device 1. Each ram has a hydraulic coupling 42 which is connectable to an external pressurised hydraulic fluid source.

The drill element 6 comprises an array of apertures 40 at its tip which allows the flow of compressed air into a layer of compressed soil. Threaded fasteners 45, such as bolts retain a portion of the first supporting means 3 to the hydraulic hammer 5. Thus, the first supporting means clamps and supports the hammer 5 in position.

Small cylindrical protrusions 43 abut the outer surface of the second supporting means, which are moveable along a vertical axis, thus enable thing the first supporting means 3 to be slidably attached to the second supporting means 4. During both the downward and upward movement of the supported hammer 5 and drill 6 elements.

Located on top of the hammer means is a plate 44 which in use clamps the trigger mechanism of the hammer means in an on/active position. Thus, when the user activates the aerating device, the hammer means will automatically be activated when an external pressurised hydraulic source is applied.

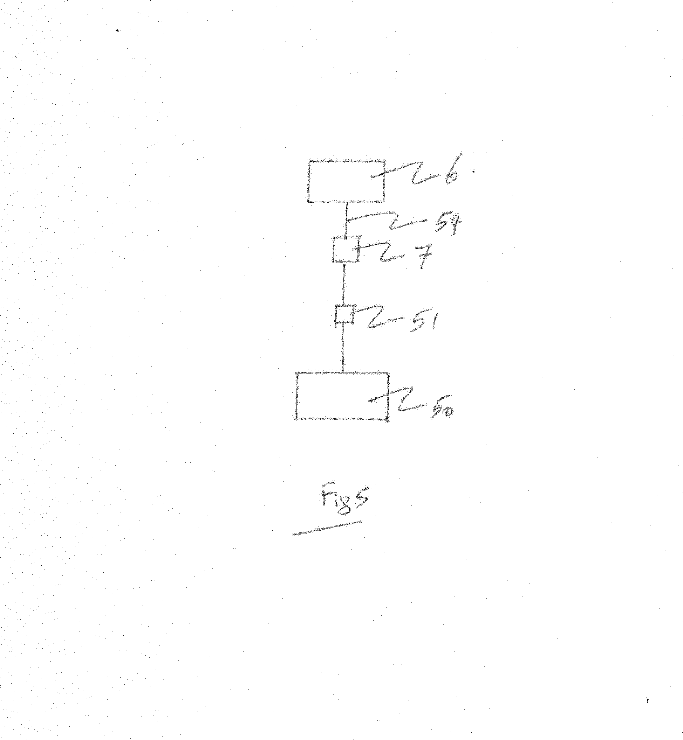

Fig 5 shows the device having one pneumatic circuit being fed from an external source 50. The circuit 54 provides compressed air to the drill element 6, via the actuator 7 and a coupling 51.

This configuration enables the activation of the actuation means when the first supporting member (carriage) is moved relative to the second supporting member (supporting Frame). Thus, during this movement the arm contacts either the first or second actuating elements arranged on the second supporting member (frame). Thus, the pivoting movement of the arm actuates the pneumatic air circuit which allows compressed air to be forced out of the apertures within the drill element of the device.

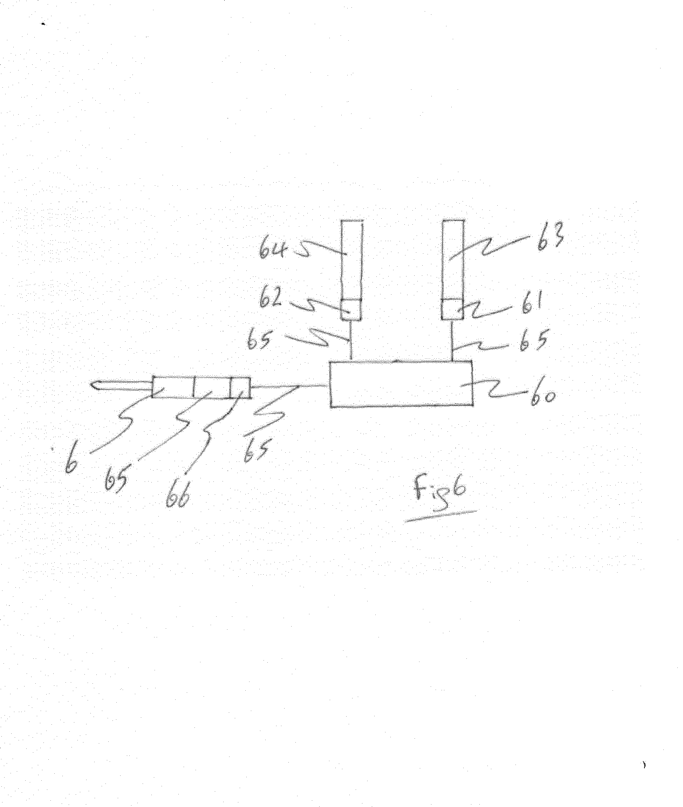

Fig 6 shows a device having hydraulic lines 65 which provide increased power for driving the hydraulic hammer 5 and drill bit 6 into the ground via the two hydraulic rams 63 and 64. The hydraulic lines 65 provide, via a coupler 60, a connection from an external pressurised hydraulic source to the hydraulic couplings 61, 62 on the hydraulic hammer 66 and each hydraulic ram 63 and 64 respectively.

This configuration allows the hydraulic rams to lower or raise the carriage relative to the supporting frame, along with powering the hammer which subsequently drives the drill bit into the ground on the lowering movement. During the raising movement of the carriage relative to the supporting frame, the supported drill bit will be lifted out of the ground.

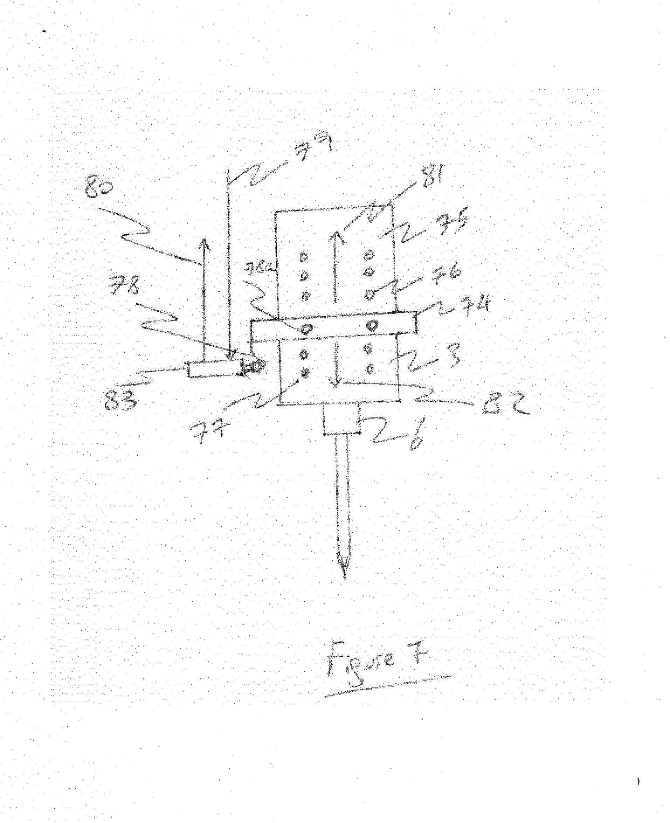

Figure 7 shows a rear view of the first supporting ((carriage)) 3 which supports the hydraulic hammer and the drill element 6. The first support3 has a metallic back plate 75 which comprises two aperture arrays 76 and 77. Attached to the back plate 75 is an arm 74 arranged laterally across the back plate 75. The arm 74 is formed of a metal and is attached to the back plate 75 via two threaded bolts 78.

The arm 74 can be positioned either towards the top or bottom ends of the back plate 75. Once positioned, the arm 74 can be fixed into the desired depth position via the two threaded bolts located within the two aperture arrays 76 and 77.

The arm 74 has a flat portion 78a that cooperates with a roller end of a hydraulic circulatory valve 83. The circulatory valve receives hydraulic fluid in the direction indicated by the arrow 79. When activated, hydraulic fluid exits the circulatory valve in the direction indicated by the arrow 80.

In use, the first support ((carriage)) 3 is lowered until the arm is lowered to a position, at which the flat portion of the arm 78a cooperates with the roller end of the hydraulic circulatory valve 79. Once activated, the circulatory valve stops the downward movement of the first support 3 by diverting the hydraulic fluid away from the hydraulic rams used to lower the first supports ((carriage))

Thus, the depth to which the drill element will penetrate the ground can be adjusted by positioning the arm 74 towards the top end of the back plate 75 - increased depth as indicated by the arrow 81. Or by positioning the arm towards the bottom end of the back plate 75 - decreasing the depth as indicated by the arrow 82.

Thus, the positional adjustment of the arm 74 determines the drill depth adjustment accordingly. By raising the arm by distance d ((e.g. 75mm)), the carriage will be required to go lower by distance d ((75mm)), before the arm activates the circulatory valve. Therefore, the drill depth has been increased by distance d ((75mm)).

By lowering the arm by distance d ((e.g. 75mm)), the carriage will be required to go higher by distance d (75mm), before the arm activates the circulatory valve. Therefore, the drill depth has been decreased by distance d (75mm).

The drill depth required for the aeration device is typically 6 to 18 inches (imperial), or 15 to 46 cm (Metric).

## Claims

1. A ground aeration device (1) comprises
an air supply connector for receiving pressurised air from a source;
a first supporting element for supporting a drill element (6) for insertion into the ground and a Hydraulic hammer means;
said drill element (6) further comprising a cavity operably connected to an air aperture (40),
a pneumatic means operably connected to said air supply comprising a actuating means for controlling supply of pressurised air through the drill element (6);
said pneumatic means is arranged on said first supporting element;
**characterised in that**
the aeration device further comprising a second supporting element, slidably attached to said first supporting element;
a hydraulic means attached to said first and second supporting elements;
said first supporting element being movable via said hydraulic means from an initial parked position to a first position relative to said second supporting element, where said actuating means cooperates with a first actuating element of said second supporting element to enable a first flow of pressurised air through said drill element and said air aperture.

2. A device according to claim 1, wherein said first supporting element is movable via said hydraulic means to a second position relative to said second supporting element, wherein said actuating means cooperates with a second actuating element of said second supporting element to enable a second flow of pressurised air through said drill element.

3. A device according to claim 1 or claim 2, wherein said movement of the first supporting element relative to the second supporting element is along a vertical axis.

4. A device according to claim 2 or claim 3, wherein said first and second actuating elements are arranged in a linear array on said second supporting element.

5. A device according to claims 2 - 4, wherein said actuating means further comprising an arm pivotally attached at one end thereto; the opposite end of said arm which cooperates with said first and second actuating elements of said second support element.

6. A device according to any of the preceding claims, wherein said second supporting element further comprises a support element aperture for attachment of said actuating element.

7. A device according to claim 6, wherein second supporting element further comprises a linear array of said support element apertures, arranged along a vertical axis.

8. A device according to claim 6 or claim 7, wherein said support element aperture is an elongate slot extending along a vertical axis.

9. A device according to any of the claims 6 - 8, wherein said actuating element further comprises a threaded element which cooperates with a threaded element of said support element aperture.

10. A device according to any of the preceding claims, wherein said apertures further comprises an indicator which is indicative of the depth at which the compressed air will flowing through the drill element and subsequently aerate the compacted ground.

11. A device according to any of the preceding claims, wherein said air coupling is attached to the second supporting element.

12. A device according to any of the preceding claims, wherein said second supporting element is an element of a supporting frame which is operably attachable to a vehicle.

13. A device according to claims 1 to 11, wherein said second supporting element is an element of a supporting frame which is operably attachable to a handcart device.

14. A method of aerating compacted subterranean layers soil comprising use of the aerating device in accordance with any of the previous claims to aerate soil.
